(19) Europäisches Patentamt
European Patent Office
Office européen des brevets

(11) EP 4 783 254 A1

(12) **EUROPEAN PATENT APPLICATION**
published in accordance with Art. 153(4) EPC

(43) Date of publication:
**29.07.2026 Bulletin 2026/31**

(21) Application number: **24868418.5**

(22) Date of filing: **14.06.2024**

(51) International Patent Classification (IPC):
***H01M 4/36*** *(2006.01)* ***H01M 4/38*** *(2006.01)*
***H01M 10/052*** *(2010.01)* ***H01M 4/02*** *(2006.01)*

(52) Cooperative Patent Classification (CPC):
**H01M 4/366; C01B 33/021; H01M 4/134; H01M 4/386; H01M 4/625; H01M 10/052; H01M 10/0525;** C01P 2002/74; C01P 2004/50; C01P 2004/61; C01P 2004/80; C01P 2006/40; H01M 2004/021; H01M 2004/027; Y02E 60/10

(86) International application number:
**PCT/KR2024/008265**

(87) International publication number:
**WO 2025/063431 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.09.2023 KR 20230127375**

(71) Applicant: **SAMSUNG SDI CO., LTD.**
**Yongin-si, Gyeonggi-do 17084 (KR)**

(72) Inventors:
- **KIM, Yookyung**
  **Yongin-si, Gyeonggi-do 17084 (KR)**
- **KIM, Deok-Hyun**
  **Yongin-si, Gyeonggi-do 17084 (KR)**
- **KIM, Youngugk**
  **Yongin-si, Gyeonggi-do 17084 (KR)**

(74) Representative: **Maiwald GmbH**
**Elisenhof**
**Elisenstraße 3**
**80335 München (DE)**

(54) **NEGATIVE ELECTRODE ACTIVE MATERIAL AND RECHARGEABLE LITHIUM BATTERY INCLUDING SAME**

(57) The present invention relates to a negative electrode active material and a rechargeable lithium battery including same. The negative electrode active material has a span value of 1.1 to 1.6 by equation 1 below, and comprises secondary particles each composed of assembled primary particles, each of which comprises a silicon nanoparticle and a metal coating layer enclosing the nanoparticles and containing a metal-based material; and an amorphous carbon coating layer enclosing surfaces of the primary particles and secondary particles.

[Equation 1]

$$\text{Span} = (D90-D10)/D50$$

(In equation 1, D10 represents the particle size corresponding to 10 % cumulative volume in the particle size distribution, D50 represents the particle size corresponding to 50 % cumulative volume in the particle size distribution, and D90 represents the particle size corresponding to 90 % cumulative volume in the particle size distribution)

EP 4 783 254 A1

FIG. 1

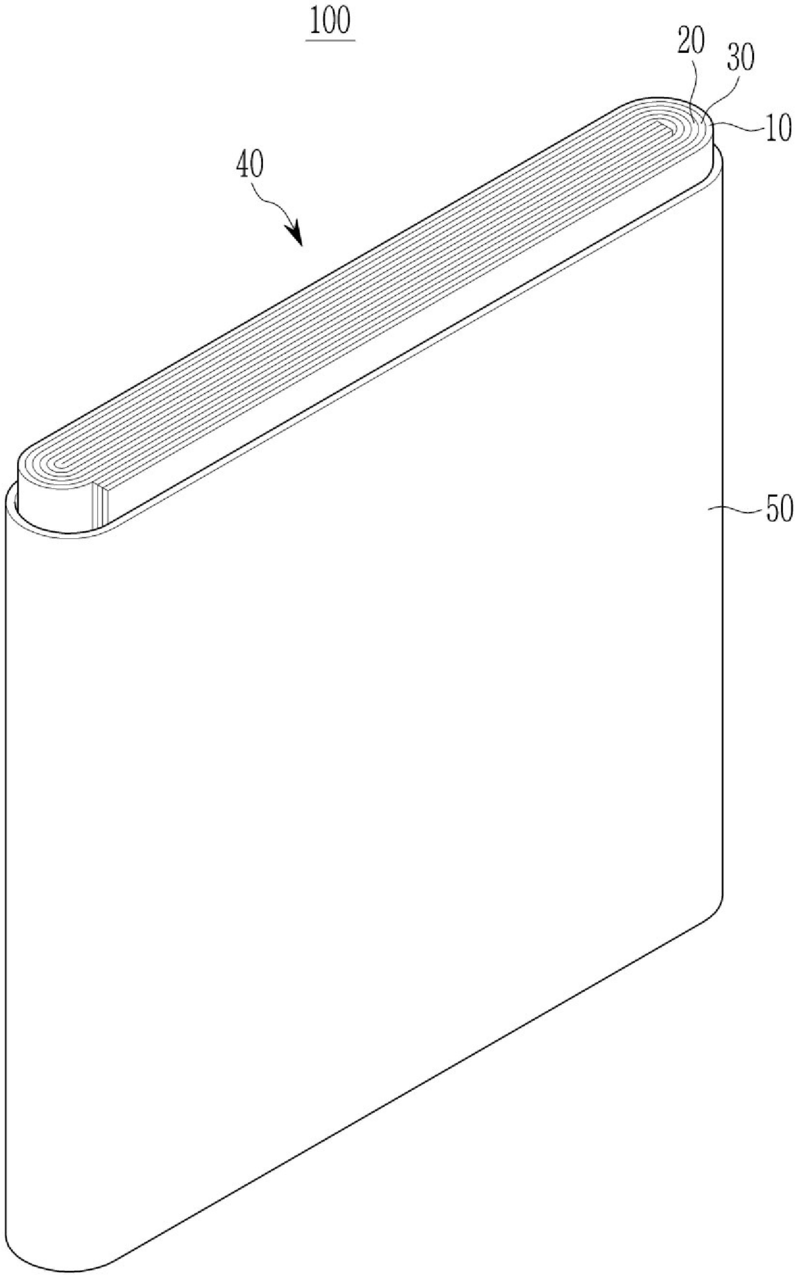

## Description

### TECHNICAL FIELD

Embodiments relate to a negative electrode active material a rechargeable lithium battery including the same.

### BACKGROUND ART

Recently, the rapid increase in electronic devices such as mobile phones, laptop computers, and electric vehicles using batteries has resulted in the surprising increases in demand for rechargeable batteries with relatively high capacity and lighter weight.

As a result, the development of batteries with a high energy density has been required, which further requires a high-capacity negative electrode active material.

It has been attempted to use a Si negative electrode active material as the high-capacity negative electrode active material.

### DETAILED DESCRIPTION OF THE INVENTION

### TECHNICAL PROBLEM

One or more embodiments provides a negative electrode active material exhibiting excellent conductivity.

Another embodiment provides a rechargeable lithium battery including the negative electrode active material.

### TECHNICAL SOLUTION

Embodiments are directed to a negative electrode active material, including a span defined by Equation 1 is about 1.1 to about 1.6; a secondary particle where primary particles are agglomerated, the primary particles including silicon nanoparticles, and a metal coating layer including a metal material surrounding a surface of each of the silicon nanoparticles; and an amorphous carbon coating layer surrounding a surface of the primary particles and a surface of the secondary particle.

[Equation 1]

$$Span= (D90-D10)/D50$$

(wherein, D10 indicates a diameter of particles having a cumulative volume of 10 volume% in a particle size distribution, D50 indicates a diameter of particles having a cumulative volume of 50 volume% in the particle size distribution, and D90 indicates a diameter of particles having a cumulative volume of 90 volume% in the particle size distribution.)

According to another embodiment, a rechargeable lithium battery including a negative electrode including the negative electrode active material; a positive electrode; and an electrolyte.

### ADVANTAGEOUS EFFECTS

A negative electrode active material according to one or more embodiment may exhibit excellent conductivity.

### BRIEF DESCRIPTION OF THE DRAWINGS

FIG. 1 is a cross-sectional view schematically showing rechargeable lithium batteries according to some embodiment.

### BEST MODE FOR PERFORMING INVENTION

Hereinafter, embodiments of the present disclosure will be described in detail. However, these embodiments are presented as an example, and the present disclosure is not limited thereto, and the present disclosure is defined by the scope of the claims described below.

Terms used in the specification is used to explain embodiments, but are not intended limit the present invention.

Expressions in the singular include expressions in plural unless the context clearly dictates otherwise. The term "combination thereof may include a mixture, a laminate, a complex, a copolymer, an alloy, a blend, a reactant of constituents.

The term "comprise", "include" or "have" are intended to designate that the performed characteristics, numbers, step, constituted elements, or a combination thereof is present, but it should be understood that the possibility of presence or addition of one or more other characteristics, numbers, steps, constituted element, or a combination are not to be precluded in advance.

The drawings show that the thickness is enlarged in order to clearly show the various layers and regions, and the same reference numerals are given to similar parts throughout the specification. If an element, such as a layer, a film, a region, a plate, and the like is referred to as being "on" or "over" another part, it may include cases where it is "directly on" another element, but also cases where there is another element in between. In contrast, when an element is referred to as being "directly on" another element, there are no intervening elements present.

In some embodiments, herein, "layer" includes a shape totally formed on the entire surface or a shape partial surface, when viewed from a plane view.

As used herein, "or" is not to be construed in an exclusive sense, for example, "A or B" may be interpreted to include A, B, A+B, or the like.

In the present disclosure, when a definition is not otherwise provided, a particle diameter or size may indicate an average particle diameter. The average particle diameter indicates an average value of the diameter of the particles depending on a cumulative volume in the particle size distribution of particles included in the negative electrode active material. The average particle size may be measured by a suitable method, e.g., by a particle size analyzer, or by a transmission electron microscopic image, or a scanning electron microscopic image. In some embodiments, a dynamic light-scattering measurement device may be used to perform a data analysis, and the number of particles may be counted for each particle size range, and from this, the average particle diameter (D50) value may be easily obtained through a calculation.

A negative electrode active material according to some embodiments may having a span as defined by Equation 1 of about 1.1 to about 1.6; a secondary particle where primary particles may be agglomerated, the primary particles may include silicon nanoparticles and a metal coating layer including a metal material surrounding a surface of the each of the silicon nanoparticles; and an amorphous carbon coating layer surrounding a surface of the primary particles and a surface of the secondary particle.

[Equation 1]

$$\text{Span} = (D90 - D10)/D50$$

In Equation 1, D10 may indicate a diameter of particles having a cumulative volume of 10 volume% in the particle size distribution, D50 may indicate a diameter of particles having a cumulative volume of 50 volume% in the particle size distribution, and D90 may indicate a diameter of particles having a cumulative volume of 90 volume% in the particle size distribution.

In an implementation, the span as defined by Equation 1 may be, e.g., about 1.1 to about 1.55, or about 1.1 to about 1.5.

A span of the negative electrode active material within the above ranges may indicate that the fine powder negative electrode active material may be substantially not included in the negative electrode active material. In an implementation, fine powders which have a size of about 1 $\mu$m or less and typically have an unspecified shape may be rarely included, and thus the negative electrode active material may have a low specific surface area, thereby reducing side reactions with an electrolyte and improving cycle-life.

The negative electrode active material according to one or more embodiments may have low specific surface area, for example, a low BET specific surface area, and the specific surface area may be about 0.5 $m^2/g$ to about 2 $m^2/g$, about 0.8 $m^2/g$ to about 2 $m^2/g$, or about 0.8 $m^2/g$ to about 1.5 $m^2/g$. A specific surface area in the above ranges may be a lower value than the specific surface area of a silicon-carbon composite negative electrode active material, which may be approximately 3 $m^2/g$.

The negative electrode active material according to one or more embodiments may include primary particles and secondary particles where the primary particles may be agglomerated, and an amorphous carbon coating layer surrounding the surface of the secondary particles.

In an implementation, the primary particle may include silicon nanoparticles and a metal coating layer surrounding the silicon nanoparticles on a surface of the silicon nanoparticles, and the metal coating layer may include a metal material. The amorphous carbon coating layer may include a metal material.

In an implementation, the metal included in the metal coating layer may be the same as the metal included in the

amorphous carbon coating layer.

In the negative electrode active material according to one or more embodiments, the primary particles may be silicon nanoparticles surrounded by the metal coating layer, and may include the coating layer in the form of a layer, including the metal material, substantially and continuously on covering, the surface of the silicon nanoparticles. In an implementation, the surface of the silicon nanoparticles may be completely covered by the metal coating layer, thereby leaving no surface of the silicon nanoparticles exposed. In an implementation, positioning the metal coating layer in the form of a layer may indicate that the metal coating layer, which may be positioned at a predetermined thickness along the surface of the silicon nanoparticles, may be positioned in area contact with the silicon nanoparticles. This may improve the internal conductivity of the negative electrode active material, thereby improving uniformity of charge and discharge, and increasing silicon utilization rate by the improvement in the electrical conductivity caused by the coating layer, and by reducing side reactions. In an implementation, if the metal coating layer is discontinuously presented on the surface of the silicon nanoparticles does not uniformly cover the surface of the silicon nanoparticles, in the form of an island-type or point-contact arrangement, the effects from the metal coating layer formation may be insignificant. In an implementation, an island-type form may indicate that the metal coating layer is only located at a specific position rather than continuously, on the surface of the silicon nanoparticles.

A thickness of the metal coating layer may be about 1 nm to about 30 nm, about 1 nm to about 20 nm, or about 5 nm to about 20 nm. Maintaining the thickness of the metal coating layer within the above ranges may help ensure that a larger improvement effect in the electrical conductivity may be obtained by the metal coating layer, and that the inside of the active material may be used more uniformly if the battery is operated.

In the negative electrode active material, the amorphous carbon coating layer may surround the surface of cover the surface of, the secondary particle and the primary particles, and it may be between the primary particles and may be also on the surface of the secondary particle.

In an implementation, the amorphous carbon coating layer may include a metal material.

The metal material included in the amorphous carbon coating layer may be present by the inclusion of some of the metal material which may be prepared during the preparation of the metal coating layer in order to locate it on the surface of the silicon nanoparticles, in the amorphous carbon coating layer in the preparation of the negative electrode active material. Thus, the metal included in the amorphous carbon coating layer may be the same metal of the metal coating layer.

In an implementation, the metal material included in the metal coating layer and the amorphous carbon coating layer may be a metal or a metal compound.

The metal compound may include metal oxide, metal nitride, or a combination thereof.

The metal may be a metal capable of alloying with lithium and may include an alkali metal, an alkaline-earth metal, a Group 13 element, a Group 14 element, a Group 15 element, a Group 16 element, a transition metal, a rare earth element, or a combination thereof. In an implementation, the metal may include Ag, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof. In an implementation, the metal may be Ag.

Because the coating layer including the metal may be distributed on the surface of the primary particles and the surface of the secondary particles inside and outside of the active material, the conductivity of the active material may be enhanced in both inside and outside.

An amount of the metal material may be, based on a total 100 wt% of the negative electrode active material about 0.01 wt% to about 20 wt%, about 0.05 wt% to about 15 wt%, or about 0.01 wt% to about 10 wt%. In an implementation, the amount of the metal material may be the total amount of the metal material included in the negative electrode active material and there is no need to limit each amount included in the metal coating layer or the amorphous carbon coating layer. Maintaining the amount of the metal material within the above ranges may help ensure the conductivity of the active material may be further improved, allowing for a more uniform utilization of the inside of the active material.

In the negative electrode active material according to one or more embodiments, in measurement of X-ray diffraction intensity, a peak intensity ratio ($I_{metal\ 111}/I_{Si\ 111}$) of a diffraction peak intensity ($I_{metal(111)}$) derived from a metal(111) detected at 2θ= about 37.5 ° to about 40.0 ° relative to a diffraction peak intensity ($I_{Si(111)}$) derived from Si(111) detected at 2θ= about 27.5 ° to about 29.5 ° may be about 0.05 to about 0.5. The ratio of peak intensity ($I_{metal(111)}/I_{Si(111)}$) may be about 0.2 to about 0.4, or about 0.1 to about 0.4. The peak intensity ratio may depend on the type of the metal, and the peak intensity ratio may be a satisfied value, if the metal is Ag. In an implementation, the diffraction peak intensity ratio may be $I_{Ag(111)}/I_{Si(111)}$.

The peak intensity ratio ($I_{Ag(111)}/I_{Si(111)}$) within the range may indicate that Si and the metal (e.g., Ag) exist in the structure of the negative electrode active material at a predetermined ratio, which may indicate an increase in the conductivity of the negative electrode active material. Increases in the conductivity of the active material may result in the substantial and majority participation of silicon nanoparticles in the charge and discharge reaction, enabling uniform charge and discharge, thereby achieving high capacity and long cycle-life.

If an amount of the metal material is increased, the diffraction peak intensity ($I_{Ag(111)}$) derived from the metal, e.g., Ag may be increased, thereby increasing the peak intensity ratio ($I_{Ag(111)}/I_{Si(111)}$). The peak intensity ratio ($I_{Ag(111)}/I_{Si(111)}$)

within the range may indicate the suitable inclusion of Ag.

In an implementation, the peak intensity may be a height of a peak or an integral area of the peak, and in another implementation, it may be the integral area of the peak.

The X-ray diffraction intensity may be measured by using a CuK$\alpha$ ray as a target ray, and the measurement condition may be 2$\theta$= about 20° to about 80°, a scan speed (°/S) of 0.044 to 0.089, and a step size (°/step) of 0.013 to 0.039. The peak intensity ratio ($I_{metal(111)}/I_{Si(111)}$), e.g., $I_{Ag(111)}/I_{Si(111)}$ may represents a ratio of the peak intensity, e.g., a relative value, and thus, the absolute values of the peak intensity ($I_{metal(111)}$)) of the (111) plane of the metal and the peak intensity $I_{Si(111)}$) of the (111) plane of Si may depend on the X-ray diffraction analysis measurement condition, but it may be important to note that the peak intensity ratio ($I_{metal(111)}/I_{Si(111)}$) itself rarely changes substantially.

In an implementation, a particle diameter of the metal material included in the amorphous carbon coating layer may be about 1 nm to about 30 nm, and in another implementation, may be about 1 nm to about 20 nm, or about 5 nm to about 20 nm. Maintaining the particle diameter of the metal material within the above ranges may help ensure the inside of the active material may be more uniformly used, during battery operation.

In an implementation, a particle diameter of the silicon nano particle may be about 10 nm to about 1,000 nm, and in another implementation, it may be about 10 nm to about 200 nm, or about 20 nm to about 150 nm. Maintaining the average particle diameter of the silicon nano particles within the above ranges may help ensure the extreme volume expansion caused during charge and discharge may be suppressed, and a breakage of the conductive path due to crushing of particle may be prevented.

In the amorphous carbon coating layer, amorphous carbon may be soft carbon, hard carbon, mesophase pitch carbide, sintered coke, or a combination thereof. A thickness of the amorphous carbon coating layer may be about 1 nm to about 2 $\mu$m, about 1 nm to about 500 nm, about 10 nm to about 300 nm, or about 20 nm to about 200 nm. Maintaining the thickness of the amorphous carbon coating layer within the above ranges may help ensure silicon volume expansion may be better suppressed during charge and discharge.

In the negative electrode active material, an amount of the silicon nanoparticle may be, based on the total 100 wt% of the negative electrode active material about 44 wt% to about 65 wt%, or about 52 wt% to about 62 wt%. An amount of the amorphous carbon coating layer may be, based on the total 10 wt% of the negative electrode active material about 34 wt% to about 46 wt%, or about 36 wt% to about 41 wt%.

The negative electrode active material according to some embodiments may be prepared by the following procedures.

Micrometer-sized silicon particles, a metal material precursor, and a dispersant may be mixed in a solvent. The mixing may be carried out by a ball milling using zirconia balls, or the like, but it is limited thereto and it may be carried out by any techniques, as long as it may pulverize silicon particle. By the mixing, a pulverization may be carried out to prepare nano-sized silicon primary particles. The solvent may include an organic solvent, e.g., ethanol, methanol, propanol, or the like. A particle diameter of the silicon primary particles may be about 1 nm to about 1000 nm, about 10 nm to about 100 nm, or about 20 nm to about 150 nm. The dispersant may be stearic acid, boron nitride (BN), MgS, polyvinyl pyrrolidone (PVP), or a combination thereof.

A mixing ratio of the silicon particles and the metal material precursor may be adjusted in order to have a mixing ratio of silicon and the metal to be about 100:1 to about 100:30 by weight, or about 100:1 to about 100:25 by weight. In mixing, an amount of the dispersant may be used in the amount suitable for the silicon particles and the metal material precursor to be well dispersed in the solvent, it may be about 100:1 to about 100:30 by weight or about 100:10 to about 100:30 by weight.

The metal material precursor may be a metal, metal nitride, metal carbide, metal sulfide, metal halide, or a combination thereof. The halide may be chloride or fluoride. The metal may be a metal capable of alloying with lithium, as described above. The resulting mixture may be dried. The drying process may be carried out by a spray drying. Because the drying process may be carried out by a spray drying, a dried product with more uniform particle diameter and a spherical shape, may be prepared and secondary particle where primary particles are agglomerated, may be prepared. This may locate the metal or metal oxide on a surface of the silicon primary particles. The silicon primary particles and the metal material precursor may be agglomerated together to prepare an agglomerated secondary particle. Some of the metal material precursor between the primary particles may be on the surface of the secondary particle. If the dried product may be particles having uniform particle diameter and a spherical shape, the subsequent prepared amorphous carbon layer may be more uniformly formed on the entire surface.

During the procedure, some of the metal material may also be included in the amorphous carbon which may be subsequently formed. An amorphous carbon layer may be formed on the dried product. The formation of the amorphous carbon layer may be carried out by vapor coating with an amorphous carbon precursor gas, or mixing the dried product with an amorphous carbon precursor and carbonizing.

The amorphous carbon precursor gas may be methane ($CH_4$) gas, ethylene ($C_2H_4$) gas, acetylene ($C_2H_2$) gas, propane ($C_3H_8$) gas, propylene ($C_3H_6$) gas, or a combination thereof, and the amorphous carbon precursor may be petroleum coke, coal coke, petroleum pitch, coal pitch, green cokes, or a combination thereof.

The carbonization may be carried out at about 600 °C to about 1,000 °C. In the carbonization, the dispersant may be removed. The carbonization may be carried out under an $N_2$ atmosphere, a helium atmosphere, or a combination thereof.

Performing the carbonization in the above the temperature range may help ensure that the excessive growth of Si particles may be suppressed, the formation of SiC may be suppressed, and the electrical conductivity of amorphous carbon may be simultaneously enhanced. According to the carbonization, the amorphous carbon precursor may be converted to amorphous carbon, which may surround the surface of the secondary particle, thereby preparing an amorphous carbon layer. Some amorphous carbon may be inserted into pores formed between primary particles to be positioned on the surface of the primary particles, thereby surrounding the surface of the primary particles. Maintaining the atmosphere of the carbonization in the above conditions may help ensure the oxidation of silicon and formation of SiC may be effectively suppressed, thereby reducing resistance of the active material.

Thereafter, the heat-treated product may be subjected to pulverization. The pulverization may be carried out by using a sieve in order to have a span (defined by Equation 1) of the negative electrode active material to be about 1.1 to about 1.6. In an implementation, the pulverization may be performed to obtain an active material with a particle size such that the span obtained from D10, D50, and D90 of the active material may be about 1.1 to about 1.6.

Another implementation provides a rechargeable lithium battery including a negative electrode, a positive electrode, and an electrolyte.

The negative electrode may include a current collector, and a negative electrode active material layer on the current collector and including a negative electrode active material layer including the negative electrode active material according to one or more embodiments.

The negative electrode active material according to some embodiments may include the negative electrode active material as a first negative electrode active material and may include crystalline carbon, as a second negative electrode active material. A mixing ratio of the first negative electrode active material and the second negative electrode active material may be a weight ratio of about 80:20 to about 90:10. In an implementation, the negative electrode active material may include the first negative electrode active material and the second negative electrode active material at a weight ratio of about 85:15 to about 90:10.

In the negative electrode active material layer, an amount of the negative electrode active material may be about 95 wt% to about 98 wt%, based on the total 100 wt% of the negative electrode active material layer.

In an implementation, the negative electrode active material layer may include a binder, and may further include a conductive material. The amount of the binder may be about 1 wt% to about 5 wt% based on the total 100 wt% of the negative electrode active material layer. The amount of the conductive material may be about 1 wt% to about 5 wt% based on the total 100 wt% of the negative electrode active material layer.

The binder may help improve binding properties of negative electrode active material particles with one another and with a current collector. The binder may be a non-aqueous binder, an aqueous binder, or a combination thereof.

The non-aqueous binder may include an ethylene propylene copolymer, polyacrylonitrile, polystyrene, polyvinylchloride, carboxylated polyvinylchloride, polyvinyl fluoride, polyurethane, polytetrafluoroethylene, polyvinylidene fluoride, polyethylene, polypropylene, polyamide imide, polyimide, or a combination thereof.

The aqueous binder may include styrene-butadiene rubber (SBR), an acrylated styrene-butadiene rubber (ABR), an acrylonitrile-butadiene rubber, an acrylic rubber, a butyl rubber, a fluorine rubber, polyethylene oxide, polyvinyl pyrrolidone, polypropylene, polyepichlorohydrin, polyphosphazene, an ethylene propylene diene copolymer, polyvinyl pyridine, chlorosulfonated polyethylene, latex, polyester resin, an acrylic resin, a phenolic resin, an epoxy resin, polyvinyl alcohol, or a combination thereof.

The negative electrode binder may include a cellulose compound, and may include the cellulose compound, together with the aqueous binder. The cellulose compound may include one or more of carboxymethyl cellulose, hydroxypropyl methylcellulose, methyl cellulose, or alkali metal salts thereof. The alkali metal may be Na, K, or Li. The cellulose compound may serve as a thickener and may impart viscosity to serve as a binder. In an implementation, it may be used by appropriately adjusting it within the ranged amount of the binder described above, and thus, it is not need to limit thereto, but for example, the amount of the cellulose compound may be about 0.1 parts by weight to about 3 parts by weight based on 100 parts by weight of the negative electrode active material.

The conductive material may impart conductivity to the electrode, and a suitable material that does not cause chemical change and conducts electrons may be used in the battery. Examples thereof may include a carbon material such as natural graphite, artificial graphite, carbon black, acetylene black, ketjen black, a carbon fiber; a metal material including copper, nickel, aluminum, silver, etc. in a form of a metal powder or a metal fiber; a conductive polymer such as a polyphenylene derivative; or a mixture thereof.

The current collector may include a copper foil, a nickel foil, a stainless steel foil, a titanium foil, a nickel foam, a copper foam, a polymer substrate coated with a conductive metal, and a combination thereof, but is not limited thereto.

The positive electrode may include a current collector and a positive electrode active material layer on the current collector. The positive electrode active material may include lithiated intercalation compounds that reversibly intercalate

and deintercalate lithium ions. In an implementation, at least one of a composite oxide of lithium and a metal, e.g., cobalt, manganese, nickel, or combinations thereof may be used. In an implementation, the compounds represented by one of the following chemical formulae may be used. $Li_aA_{1-b}X_bD^1_2$ (0.90 ≤a≤1.8, 0≤b≤0.5); $Li_aA_{1-b}X_bO_{2-c1}D^1_{c1}$ (0.90≤a≤1.8, 0≤b≤0.5, 0≤c1≤0.05); $Li_aE_{1-b}X_bO_{2-c1}D^1_{c1}$ (0.90≤a≤1.8, 0≤b≤0.5, 0≤c1≤0.05); $Li_aE_{2-b}X_bO_{4-c1}D^1_{c1}$ (0.90≤a ≤1.8, 0≤b≤0.5, 0≤c1≤0.05); $Li_aNi_{1-b-c}Co_bX_cD^1_\alpha$ (0.90≤a≤1.8, 0≤b≤0.5, 0≤c≤0.5, 0<α≤2); $Li_aNi_{1-b-c}Co_bX_cO_{2-\alpha}T_\alpha$ (0.90≤a≤1.8, 0≤b≤0.5, 0≤c≤0.5,0<α<2); $Li_aNi_{1-b-c}Co_bX_cO_{2-\alpha}T_2$ (0.90≤a≤1.8, 0≤b≤0.5, 0≤c≤0.5,0<α<2); $Li_aNi_{1-b-c}Mn_bX_cD^1_\alpha$ (0.90≤a≤1.8, 0≤b≤0.5, 0≤c≤0.5, 0<α≤2); $Li_aNi_{1-b-c}Mn_bX_cO_{2-\alpha}T_\alpha$ (0.90≤a≤1.8, 0≤b≤0.5, 0≤c≤0.5, 0<α<2); $Li_aNi_{1-b-c}Mn_bX_cO_{2-\alpha}T_2$ (0.90≤a≤1.8, 0≤b≤0.5, 0≤c≤0.5, 0<α<2); $Li_aNi_bE_cG_dO_2$ (0.90≤a≤1.8, 0≤b≤0.9, 0≤c≤0.5,0.001≤d≤0.1); $Li_aNi_bCo_cL^1_dG_eO_2$ (0.90≤a≤1.8, 0≤b≤0.9, 0≤c≤0.5,0≤d≤0.5, 0≤e≤0.1); $Li_aNiG_bO_2$ (0.90≤a≤1.8, 0.001≤b≤0.1) $Li_aCoG_bO_2$ (0.90≤a≤1.8, 0.001≤b≤0.1); $Li_aMn_{1-b}G_bO_2$ (0.90≤a≤1.8, 0.001≤b≤0.1); $Li_aMn_2G_bO_4$ (0.90≤a≤1.8, 0.001≤b≤0.1); $Li_aMn_{1-g}G_gPO_4$ (0.90≤a≤1.8, 0≤g≤0.5); $QO_2$; $QS_2$; $LiQS_2$; $V_2O_5$; $LiV_2O_5$; $LiZO_2$; $LiNiVO_4$; $Li_{(3-f)}J_2(PO_4)_3$ (0≤f≤2); $Li_{(3-f)}Fe_2(PO_4)_3$ (0≤f≤2); $Li_aFePO_4$ (0.90≤a≤1.8)

In the above chemical formulas, A is selected from Ni, Co, Mn, or combinations thereof; X is selected from Al, Ni, Co, Mn, Cr, Fe, Mg, Sr, V, a rare earth element, and combinations thereof; $D^1$ is selected from O, F, S, P, or combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, or combinations thereof; Z is selected from Cr, V, Fe, Sc, Y, or combinations thereof; J is selected from V, Cr, Mn, Co, Ni, Cu, or combinations thereof; $L^1$ is selected from Mn, Al, or combinations thereof.

The compounds may have a coating layer on the surface, or may be mixed with another compound having a coating layer. The coating layer may include a coating element compound, e.g., an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and the method may include any coating method such as spray coating, dipping, or the like, but is not illustrated in more detail since it is well known in the related field.

In the positive electrode, an amount of the positive electrode active material may be about 90 wt% to about 98 wt%, based on the total weight of the positive electrode active material layer.

In an implementation, the positive electrode active material layer may further include a binder and a conductive material. The binder and the conductive material may each be included in an amount of about 1 wt% to about 5 wt%, respectively based on the total amount of the positive electrode active material layer.

The binder may help improve binding properties of positive electrode active material particles with one another and with a current collector. Examples of the binder may include polyvinyl alcohol, carboxymethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, a styrene butadiene rubber, an acrylated styrene butadiene rubber, an epoxy resin, nylon, or the like, but are not limited thereto.

The conductive material may provide electrode conductivity, and a suitable electrically conductive material may be used as a conductive material unless it causes a chemical change. Examples of the conductive material may include a carbon material such as natural graphite, artificial graphite, carbon black, acetylene black, ketjen black, a carbon fiber and the like; a metal material of a metal powder or a metal fiber including copper, nickel, aluminum, silver, or the like; a conductive polymer such as a polyphenylene derivative; or a mixture thereof.

The current collector may_include Al, but is not limited thereto.

The electrolyte may include a non-aqueous organic solvent and a lithium salt.

The non-aqueous organic solvent may serve as a medium for transmitting ions taking part in the electrochemical reaction of a battery.

The non-aqueous organic solvent may include a carbonate, ester, ether, ketone, alcohol, or aprotic solvent.

The carbonate solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), or the like, the ester solvent may include methyl acetate, ethyl acetate, n-propyl acetate, dimethyl acetate, methyl propionate, ethyl propionate, propyl propionate, v-butyrolactone, decanolide, valerolactone, mevalonolactone, caprolactone, or the like. The ether solvent may include dibutyl ether, tetraglyme, diglyme, dimethoxyethane, 2-methyltetrahydrofuran, 2,5-dimethyltetrahydrofuran, tetrahydrofuran, or the like, and the ketone solvent may include cyclohexanone, or the like. The alcohol solvent may include ethanol, isopropyl alcohol, or the like, and the aprotic solvent may include nitriles such as R-CN (wherein R may be a C2 to C20 linear, branched, or cyclic hydrocarbon group, and may include a double bond, an aromatic ring, or an ether bond, or the like); amides such as dimethylformamide; dioxolanes such as 1,3-dioxolane, 1,4-dioxolane, or the like; sulfolanes, or the like.

The organic solvent may be used alone or in a mixture. In an implementation, the organic solvent may be used in a

mixture and the mixture ratio may be controlled in accordance with a desirable battery performance, and it may be well known to those skilled in the related art.

In an implementation the non-aqueous organic solvent may be mixed and used, a mixed solvent of a cyclic carbonate and a chain carbonate, a mixed solvent of a cyclic carbonate and a propionate solvent, or a mixed solvent of a cyclic carbonate, a chain carbonate, and a propionate solvent may be used. The propionate solvent may include methyl propionate, ethyl propionate, propyl propionate, or a combination thereof.

In an implementation the cyclic carbonate and the chain carbonate or the cyclic carbonate and the propionate solvent may be mixed in a volume ratio of about 1:1 to about 1:9 and thus performance of an electrolyte solution may be improved. In an implementation the cyclic carbonate, the chain carbonate, and the propionate solvent may be mixed in a volume ratio of about 1:1:1 to about 3:3:4. The mixing ratios of the solvents may be appropriately adjusted according to desirable properties.

In an implementation, the organic solvent may further include an aromatic hydrocarbon solvent as well as the carbonate solvent. The carbonate solvent and aromatic hydrocarbon solvent may be mixed together in a volume ratio of about 1:1 to about 30:1.

The aromatic hydrocarbon organic solvent may be an aromatic hydrocarbon compound represented by Chemical Formula 1.

[Chemical Formula 1]

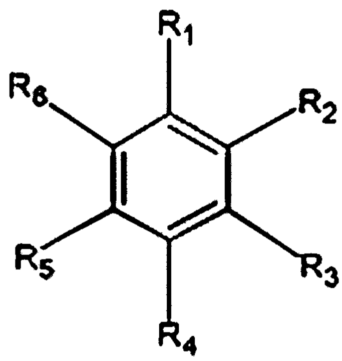

In Chemical Formula 1, $R_1$ to $R_6$ may each independently be or include hydrogen, a halogen, a C1 to C10 alkyl group, a haloalkyl group, or a combination thereof.

In an implementation, the aromatic hydrocarbon organic solvent may include benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or a combination thereof.

In an implementation, the electrolyte may further include vinylethyl carbonate, vinylene carbonate, or an ethylene carbonate compound represented by Chemical Formula 2 as an additive for improving cycle life.

[Chemical Formula 2]

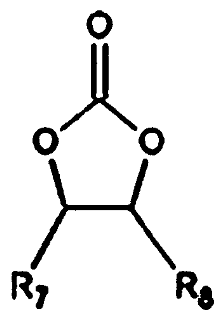

In Chemical Formula 2, $R_7$ and $R_8$ may each independently be or include hydrogen, a halogen, a cyano group (CN), a nitro group ($NO_2$), or a C1 to C5 fluoroalkyl group, provided that at least one of $R_7$ and $R_8$ is or includes a halogen, a cyano group (CN), a nitro group ($NO_2$), or a C1 to C5 fluoroalkyl group, and $R_7$ and $R_8$ are not simultaneously hydrogen.

In an implementation, the ethylene carbonate compound may include difluoro ethylene carbonate, chloroethylene carbonate, dichloroethylene carbonate, bromoethylene carbonate, dibromoethylene carbonate, nitroethylene carbonate, cyanoethylene carbonate, fluoroethylene carbonate, or the like. An amount of the additive for improving the cycle-life characteristics may be used within a suitable range.

The lithium salt dissolved in an organic solvent may supply a battery with lithium ions, may basically operates the rechargeable lithium battery, and may help improve transportation of the lithium ions between a positive electrode and a negative electrode. Examples of the lithium may include $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, wherein x and y are natural numbers, e.g., an integer of about 1 to about 20, lithium difluoro(bisoxolato) phosphate), LiCl, LiI, $LiB(C_2O_4)_2$ (lithium bis(oxalato) borate)(LiBOB), or lithium difluoro(oxalato) borate (LiDFOB). A concentration of the lithium salt may range from about 0.1 M to about 2.0 M. Maintaining the concentration of the lithium salt within the above concentration range may help ensure that an electrolyte may have excellent performance and lithium ion mobility due to optimal electrolyte conductivity and viscosity.

A separator may be between the positive electrode and the negative electrode depending on a type of a rechargeable lithium battery. The separator may include polyethylene, polypropylene, polyvinylidene fluoride or multi-layers thereof having two or more layers and may be a mixed multilayer such as a polyethylene/polypropylene double-layered separator, a polyethylene/polypropylene/polyethylene triple-layered separator, a polypropylene/polyethylene/-polypropylene triple-layered separator, or the like.

FIG. 1 is an exploded perspective view of a rechargeable lithium battery according to an embodiment. In an implementation, as illustrated in the drawing figure, the rechargeable lithium battery may be a prismatic battery or may include variously-shaped batteries such as a cylindrical battery, a pouch battery, or the like.

As illustrated in FIG. 1, a rechargeable lithium battery 100 according to an embodiment may include an electrode assembly 40 manufactured by winding a separator 30 between a positive electrode 10 and a negative electrode 20 and a case 50 housing the electrode assembly 40. An electrolyte (not shown) may be impregnated in the positive electrode 10, the negative electrode 20 and the separator 30.

## MODE FOR PERFORMING THE INVENTION

Hereinafter, examples of the present invention and comparative examples are described. These examples, however, are not in any sense to be interpreted as limiting the scope of the invention.

(Example 1)

In an ethanol solvent, a mixing was conducted by pulverizing silicon particles with an average particle diameter of 8 μm, nano-sized Ag, and a stearic acid dispersant using zirconia balls for 8 hours. In this procedure, silicon primary particles with an average particle diameter D50 of 100 nm were prepared. A mixing ratio of the silicon particles and the stearic acid dispersant was set to a weight ratio of silicon particle:stearic acid dispersant to be 100:25, and an amount of Ag was adjusted in order to have a weight ratio of silicon and Ag of 100:20.

The mixture was spray-dried to prepare secondary particles having an average particle diameter D50 of 7 μm and pores.

The prepared secondary particle and petroleum pitch were mixed in a weight ratio of 60:40 and the mixture was carbonized at 1,000 °C under an $N_2$ atmosphere.

Thereafter, the carbonized product was pulverized in order to have span shown in Table 1, thereby preparing a negative electrode active material.

The prepared negative electrode active material included a secondary particle having an average particle diameter D50 of 7 μm, where silicon primary particles having an average particle diameter D50 of 100 nm, surrounded by Ag at a thickness of 20 nm (thickness of Ag coating layer: 20 nm), are agglomerated, and a soft carbon coating layer coated on the primary particles and the secondary particle, and including Ag.

Based on the total weight of the negative electrode active material, an amount of Ag was 10 wt%, an amount of the silicon nanoparticles was 50 wt%, and the amount of the soft carbon was 40 wt%.

97.5 wt% of the prepared negative electrode active material, 1.5 wt% of carboxymethyl cellulose, and 1 wt% of a styrene butadiene rubber were mixed in a water solvent to prepare a negative electrode active material layer slurry.

The negative electrode active material layer slurry was coated on a Cu foil current collector, dried, and pressurized to prepare a negative electrode active material layer, thereby preparing a negative electrode.

The negative electrode, a lithium metal counter electrode, and an electrolyte were used to fabricate a half-cell by

the general procedures. The electrolyte was a 1 M $LiPF_6$ solution in a mixed solvent of ethylene carbonate and dimethyl carbonate (3:7 volume ratio).

The negative electrode, a $LiCoO_2$ positive electrode, and an electrolyte were used to fabricate a coin-type full cell. The electrolyte was a 1 M $LiPF_6$ solution in a mixed solvent of ethylene carbonate and dimethyl carbonate (3:7 volume ratio).

(Example 2)

A negative electrode, a half-cell, and a coin-type full cell were fabricated by the same procedure as in Example 1, except that the pulverization was carried out in order to have span of 1.5, thereby preparing a negative electrode active material.

(Example 3)

A negative electrode, a half-cell, and a coin-type full cell were fabricated by the same procedure as in Example 1, except that a negative electrode active material whose amount of Zn was 10 wt% and span was 1.1, was prepared by using Zn instead of Ag.

(Example 4)

A negative electrode, a half-cell, and a coin-type full cell were fabricated by the same procedure as in Example 1, except that Ag was used in order to have a mixing ratio of silicon and Ag at a weight ratio of 100:6 to prepare a negative electrode active material having span of 1.1, an amount of Ag of 3 wt% based on the total weight of the negative electrode active material, secondary particles with an average particle diameter D50 of 7 μm where silicon primary particle with an average particle diameter D50 of 100 nm coated with Ag at a 5 nm thickness, and a soft carbon coating layer including Ag. In the prepared negative electrode active material, an amount of Ag was 3 wt%, an amount of the silicon nanoparticles was, and the amount of the soft carbon was 40 wt%.

(Comparative Example 1)

A negative electrode active material with span 1.1 was prepared without using Ag. The negative electrode active material was used to fabricate a negative electrode, a half-cell, and a coin-type full cell by the same procedure as in Example 1.

(Comparative Example 2)

In an ethanol solvent, a mixing was conducted by pulverizing silicon particles with an average particle diameter of 8 μm and a stearic acid dispersant using a zirconia ball for 8 hours. In this procedure, silicon primary particles with an average particle diameter D50 of 100 nm were prepared. A mixing ratio of the silicon particles and the stearic acid dispersant was set to a weight ratio of silicon particle:stearic acid dispersant to be 100:25.

Nano-sized Ag was added to the resulting product at a mixing ratio of silicon and Ag to be a weight ratio of 100:20, and then spray-dried to prepare secondary particles having an average particle diameter D50 of 7 μm and pores.

The prepared secondary particle was primarily heat-treated at 350 °C under an air atmosphere for 1 hour.

The prepared secondary particle and petroleum pitch were mixed at a weight ratio of 60:40, and the mixture was carbonized at 1,000 °C under an $N_2$ atmosphere to prepare a negative electrode active material.

The prepared negative electrode active material included a secondary particle having an average particle diameter D50 of 7 μm where silicon primary particles having an average particle diameter D50 of 100 nm were agglomerated, Ag was point-contacted with the surface of the primary particles, and a soft carbon coating layer coated on the primary particles and the secondary particle, and including Ag.

Based on the total weight of the negative electrode active material, an amount of Ag was 10 wt%, an amount of the silicon nanoparticles was 50 wt%, and the amount of the soft carbon was 40 wt%.

The negative electrode active material was used to fabricate a negative electrode, a half-cell, and a coin-type full cell by the same procedure as in Example 1.

(Comparative Example 3)

In an ethanol solvent, a mixing was conducted by pulverizing silicon particles with an average particle diameter of 8 μm and a stearic acid dispersant using a zirconia ball for 8 hours. In this procedure, silicon primary particles with an

average particle diameter D50 of 100 nm were prepared. A mixing ratio of the silicon particles and the stearic acid dispersant was set to a weight ratio of silicon particle:stearic acid dispersant to be 100:25.

The resulting product was spray-dried to prepare secondary particles having an average particle diameter D50 of 7 μm and pores.

The prepared secondary particle and petroleum pitch were mixed at a weight ratio of 60:40, and the mixture was carbonized at 1,000 °C under an $N_2$ atmosphere to prepare a Si-carbon composite including secondary particle having an average particle diameter D50 of 7 μm where silicon primary particles having an average particle diameter D50 of 100 nm were agglomerated, and a soft carbon coating layer coated on the primary particles and the secondary particles.

The Si-carbon composite and Ag were mixed at a weight ratio of 100:10 to prepare a negative electrode active material.

The negative electrode active material was used to fabricate a negative electrode, a half-cell, and a coin-type full cell by the same procedure as in Example 1.

(Comparative Example 4)

Silicon particles with an average particle diameter of 8 μm and a stearic acid dispersant were pulverized using zirconia balls for 8 hours to prepare silicon primary particles having an average particle diameter D50 of 100 nm.

The silicon primary particles and $Ag_2Si$ were mixed and then spray-dried to prepare secondary particles having an average particle diameter D50 of 7 μm and pores.

An amount of $Ag_2Si$ was used in order to have an amount of Ag to be 10 wt% based on the total 100 wt% of the final negative electrode active material.

The prepared secondary particle and petroleum pitch were mixed at a weight ratio of 60:40, and the mixture was carbonized at 1,000 °C under an $N_2$ atmosphere to prepare a negative electrode active material.

The prepared negative electrode active material included a secondary particle having an average particle diameter D50 of 7 μm including silicon primary particles having an average particle diameter D50 of 100 nm agglomerated with $Ag_2Si$ and a soft carbon coating layer coated on the primary particles and the secondary particle, and including Ag.

The negative electrode active material was used to fabricate a negative electrode, a half-cell, and a coin-type full cell by the same procedure as in Example 1.

<u>Experimental Example 1: Evaluation of span</u>

D10, D50, and D90 of the negative electrode active materials of Examples 1 to 4 and Comparative Examples 1 to 4 were measured using a particle analyzer (Product name: LS 13 320, Manufacturer: Beckman Coulter). The results are shown in Table 1. From these values, span defined by Equation 1 was obtained. The results are shown in Table 1.

<u>Experimental Example 2: Evaluation of XRD characteristic of negative electrode active material</u>

Regarding the negative electrode active materials of Examples 1 to 4 and Comparative Examples 1 to 4, an X-ray diffraction analysis (XRD, X-ray Diffraction) was carried out by using a CuKα ray to a peak intensity ratio ($I_{Ag(111)}/I_{Si(111)}$) of a peak intensity ($I_{Ag(111)}$) at a (111) plane of Ag relative to a peak intensity ($I_{Si(111)}$) at a (111) plane of Si. The peak intensity ratio was defined as the height ratio of the peak. The results of Examples 1 to 4, and Comparative Examples 2 and 4 are shown in Table 1.

<u>Experimental Example 3: Evaluation of charge and discharge efficiency</u>

The half-cells according to Examples 1 to 4 and Comparative Examples 1 to 4 were once charged and discharged at 0.1C, and a ratio of the measured discharge capacity relative to the measured charge capacity was calculated. The results are shown in Table 1, as efficiency.

<u>Experimental Example 4: Evaluation of rate capability</u>

The half-cells according to Examples 1 to 4 and Comparative Examples 1 to 4 were once charged and discharged at 0.2C, and then once charged and discharged at 2C. A ratio of charge capacity at 2C relative to charge capacity at 0.2C was calculated. The results are shown in Table 1, as charge rate capability.

<u>Experimental Example 5: Evaluation of accelerated life</u>

The coin-type full cells according to Examples 1 to 3 and Comparative Examples 1 to 5 were charged and

discharged at 1C for 500 cycles. A ratio of discharge capacity at 1st cycle relative to discharge capacity at 500th cycle was calculated. The results are shown in Table 1.

Table 1

| | D90 (μm) | D50 (μm) | D10 (μm) | Span | Peak intensity ratio (IAg(111)/Si(111)) | Efficiency (%) | Charge rate capability (%) | Accelerated life (%) |
|---|---|---|---|---|---|---|---|---|
| Example 1 | 13.7 | 8.2 | 4.7 | 1.1 | 0.38 | 91 | 45.5 | 91.5 |
| Example 2 | 16.9 | 8.5 | 3.9 | 1.5 | 0.38 | 90.4 | 43.3 | 91.3 |
| Example 3 | 13.7 | 8.2 | 4.7 | 1.1 | 0.40 | 90.6 | 43.5 | 91.2 |
| Example 4 | 13.7 | 8.2 | 4.7 | 1.1 | 0.07 | 90.6 | 42.5 | 91.0 |
| Comparative Example 1 | 13.7 | 8.2 | 4.7 | 1.1 | - | 90.6 | 42 | 90.5 |
| Comparative Example 2 | 13.7 | 8.2 | 4.7 | 1.1 | 0.38 | 89.8 | 42.6 | 90.7 |
| Comparative Example 3 | 13.7 | 8.2 | 4.7 | 1.1 | - | 84.1 | 42.3 | 6.1 |
| Comparative Example 4 | 13.7 | 8.2 | 4.7 | 1.1 | 0.35 | 82.5 | 37.2 | 84.4 |

As shown in Table 1, the cells including the negative electrode active materials of Examples 1 to 4 exhibited high efficiency and charge rate capability, and excellent accelerated life. Whereas, Comparative Example 1, which did not include Ag, exhibited deteriorated charge rate capability and an accelerated life.

Comparative Example 2 in which Ag was positioned at a point-contacted with the surface of the silicon primary particles, exhibited low charge and discharge efficiency. Comparative Example 3 using the negative electrode active material in which the Si-carbon composite and Ag were simply mixed, exhibited remarkably low charge and discharge efficiency and low charge rate capability, and showed the accelerated life of 6.1% which was significantly deteriorated.

Comparative Example 4, using the negative electrode active material in which the Si-carbon composite and the Si-Ag compound were mixed, showed extremely deteriorated charge and discharge efficiency, charge rate capability, and accelerated life.

While this disclosure has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

**1.** A negative electrode active material, comprising:

a span defined by Equation 1 is about 1.1 to about 1.6,
a secondary particle where primary particles are agglomerated, the primary particles comprising silicon nanoparticles, and a metal coating layer comprising a metal material surrounding a surface of each of the silicon nanoparticles; and
an amorphous carbon coating layer surrounding a surface of the primary particles and a surface of the secondary particle,

[Equation 1]

$$\text{Span} = (D90 - D10)/D50$$

(wherein, D10 indicates a diameter of particles having a cumulative volume of 10 volume% in a particle size

distribution, D50 indicates a diameter of particles having a cumulative volume of 50 volume% in the particle size distribution, and D90 indicates a diameter of particles having a cumulative volume of 90 volume% in the particle size distribution)

**2.** The negative electrode active material as claimed in claim 1, wherein the metal material comprises a metal or a metal compound.

**3.** The negative electrode active material as claimed in claim 2, wherein the metal compound comprises a metal oxide, a metal nitride, or a combination thereof.

**4.** The negative electrode active material as claimed in claim 1, wherein the metal material comprises a metal capable of alloying with lithium.

**5.** The negative electrode active material as claimed in claim 4, wherein the metal comprises an alkali metal, an alkaline-earth metal, a Group 13 element, a Group 14 element, a Group 15 element, a Group 16 element, a transition metal, a rare earth element, or a combination thereof.

**6.** The negative electrode active material as claimed in claim 5, wherein the metal comprises Ag, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, or a combination thereof.

**7.** The negative electrode active material as claimed in claim 6, wherein the metal comprises Ag.

**8.** The negative electrode active material as claimed in claim 1, wherein an amount of the metal material is about 0.01 wt% to about 20 wt%, based on a total weight of the negative electrode active material.

**9.** The negative electrode active material as claimed in claim 1, wherein an amount of the metal material is about 0.05 wt% to about 15 wt%, based on a total weight of the negative electrode active material.

**10.** The negative electrode active material as claimed in claim 1, wherein the amorphous carbon coating layer further comprises another metal material.

**11.** The negative electrode active material as claimed in claim 7, wherein the negative electrode active material has a ratio of a peak intensity ($I_{metal\ 111}/I_{Si\ 111}$) of a diffraction peak intensity ($I_{metal(111)}$) derived from a metal(111) detected at $2\theta$= about 37.5 ° to about 40.0 ° relative to a diffraction peak intensity ($I_{Si(111)}$) derived from Si(111) detected at $2\theta$= about 27.5 ° to about 29.5 ° of about 0.05 to about 0.5 in measurement of X-ray diffraction intensity.

**12.** The negative electrode active material as claimed in claim 1, wherein the metal coating layer continuously covers the surface of each of the silicon nanoparticles.

**13.** The negative electrode active material as claimed in claim 1, wherein the metal coating layer has a thickness of about 1 nm to about 30 nm.

**14.** The negative electrode active material as claimed in claim 1, wherein the silicon nanoparticles have a particle diameter of about 10 nm to about 1,000 nm.

**15.** The negative electrode active material as claimed in claim 1, wherein the amorphous carbon coating layer has a thickness of about 1 nm to about 2 $\mu$m.

**16.** The negative electrode active material as claimed in claim 1, wherein an amount of the silicon nanoparticle is about 44 wt% to about 65 wt%, based on a total weight of the negative electrode active material.

**17.** The negative electrode active material as claimed in claim 1, wherein an amount of the amorphous carbon coating layer is about 34 wt% to about 46 wt%, based on a total weight of the negative electrode active material.

**18.** A rechargeable lithium battery, comprising:

a negative electrode comprising the negative electrode active material of any one of claim 1 to claim 17;

a positive electrode; and
an electrolyte.

FIG. 1

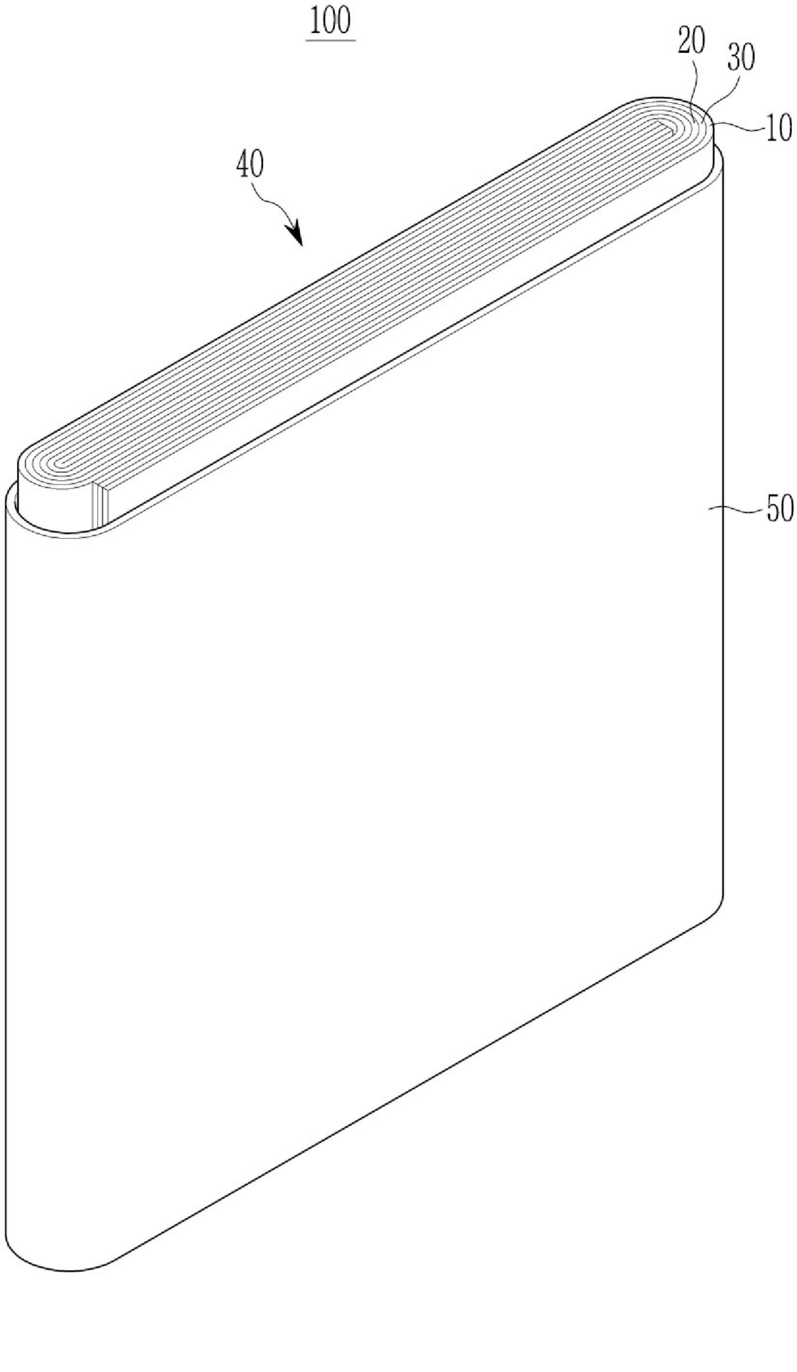

**INTERNATIONAL SEARCH REPORT**

International application No. **PCT/KR2024/008265**

**A. CLASSIFICATION OF SUBJECT MATTER**

**H01M 4/36**(2006.01)i; **H01M 4/38**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); H01M 10/052(2010.01); H01M 10/0525(2010.01); H01M 12/08(2006.01); H01M 4/48(2010.01); H01M 4/58(2010.01); H01M 4/587(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 음극 활물질(anode active material), 스팬 값(span value), 실리콘 나노입자(silicon nanoparticle), 금속 코팅층(metal coating layer), 이차입자(secondary particle), 비정질 탄소 코팅층(amorphous carbon coating layer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2021-0061008 A (SAMSUNG SDI CO., LTD.) 27 May 2021 (2021-05-27)<br>See claims 1-3, 5, 7-9, 13 and 15; and paragraphs [0029], [0046]-[0048] and [0126]. | 1-18 |
| Y | JP 2013-222641 A (SHOWA DENKO K.K.) 28 October 2013 (2013-10-28)<br>See claims 1 and 8; and paragraphs [0017]-[0021]. | 1-18 |
| Y | KR 10-1767265 B1 (SHIN-ETSU CHEMICAL CO., LTD.) 10 August 2017 (2017-08-10)<br>See claims 1 and 2. | 7,11 |
| A | KR 10-2017-0033123 A (SAMSUNG ELECTRONICS CO., LTD. et al.) 24 March 2017 (2017-03-24)<br>See claims 1 and 10-13; paragraphs [0057]-[0064]; and figure 2d. | 1-18 |
| A | KR 10-2285149 B1 (SAMSUNG SDI CO., LTD.) 04 August 2021 (2021-08-04)<br>See claims 1, 2 and 4-13. | 1-18 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 September 2024** | **13 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208**<br>Facsimile No. **+82-42-481-8578** | Telephone No. |

Form PCT/ISA/210 (second sheet) (July 2022)

**INTERNATIONAL SEARCH REPORT**

International application No.
**PCT/KR2024/008265**

**C. DOCUMENTS CONSIDERED TO BE RELEVANT**

| Category* | Citation of document, with indication, where appropriate, of the relevant passages | Relevant to claim No. |
|---|---|---|
| A | KR 10-2015-0101310 A (SAMSUNG ELECTRONICS CO., LTD.) 03 September 2015 (2015-09-03) See claims 1-19 and 21-23. | 1-18 |

Form PCT/ISA/210 (second sheet) (July 2022)

**INTERNATIONAL SEARCH REPORT**
**Information on patent family members**

International application No.
**PCT/KR2024/008265**

| Patent document cited in search report | Publication date (day/month/year) | Patent family member(s) | Publication date (day/month/year) |
|---|---|---|---|
| KR 10-2021-0061008 A | 27 May 2021 | CN 112909226 A | 04 June 2021 |
| | | US 2021-0151746 A1 | 20 May 2021 |
| JP 2013-222641 A | 28 October 2013 | None | |
| KR 10-1767265 B1 | 10 August 2017 | CN 102054983 A | 11 May 2011 |
| | | CN 102054983 B | 13 May 2015 |
| | | JP 2011-096455 A | 12 May 2011 |
| | | JP 5215978 B2 | 19 June 2013 |
| | | KR 10-2011-0046369 A | 04 May 2011 |
| | | US 2011-0097627 A1 | 28 April 2011 |
| | | US 9287561 B2 | 15 March 2016 |
| KR 10-2017-0033123 A | 24 March 2017 | CN 106953068 A | 14 July 2017 |
| | | CN 106953068 B | 26 November 2021 |
| | | EP 3145001 A1 | 22 March 2017 |
| | | EP 3145001 B1 | 15 April 2020 |
| | | KR 10-2368307 B1 | 02 March 2022 |
| | | US 10516157 B2 | 24 December 2019 |
| | | US 2017-0077497 A1 | 16 March 2017 |
| KR 10-2285149 B1 | 04 August 2021 | KR 10-2016-0057813 A | 24 May 2016 |
| | | US 11223040 B2 | 11 January 2022 |
| | | US 2016-0141608 A1 | 19 May 2016 |
| KR 10-2015-0101310 A | 03 September 2015 | KR 10-2192087 B1 | 16 December 2020 |
| | | US 2015-0243969 A1 | 27 August 2015 |
| | | US 9548490 B2 | 17 January 2017 |

Form PCT/ISA/210 (patent family annex) (July 2022)